# EUROPEAN PATENT APPLICATION

(11) **EP 4 379 938 A1**
(43) Date of publication of application: **05.06.2024**
(21) Application number: 22940932.1
(22) Date of filing: 17.10.2022
(51) Int. Cl.: H01M 50/40, H01M 10/0525

(54) **ELECTRODE ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: LIU, Huanji, Ningde, Fujian 352100 (CN); LING, Yangfang, Ningde, Fujian 352100 (CN); HUANG, Jiantao, Ningde, Fujian 352100 (CN); SUN, Xin, Ningde, Fujian 352100 (CN); JIN, Haizu, Ningde, Fujian 352100 (CN)
(74) Representative: Frick, Robert
(86) International application number: PCT/CN2022/125628
(87) International publication number: WO 2024/082088

(57) **Abstract**

An electrode assembly (23), a battery cell (20), a battery (100), and an electrical device. The electrode assembly (23) includes: a plurality of electrode plates (232), each of the plurality of electrode plates having a first side and a second side which are oppositely arranged along a first direction, and at least one of the first side and the second side being provided with a tab; and a separator (233), arranged alternately with a plurality of electrode plates (232); the separator (233) is configured to be thermally insulated on at least one of the first side and the second side; and/or the separator (233) is configured to be thermally insulated on an outermost layer of the plurality of electrode plates.

## Description

### TECHNICAL FIELD

The present application relates to the field of battery technology, in particular to an electrode assembly, a battery cell, a battery, and an electrical device.

### BACKGROUND

In recent years, with the rapid development of mobile devices, electric vehicles, and smart grids, batteries with high energy density have received extensive attention and research, among which, temperature is an important factor affecting the battery capacity.

Under low temperature conditions, the activity of the active material in the battery is low, causing the capacity to be greatly reduced, and in the process of charging at a high rate, the battery is also prone to have the phenomenon of serious lithium precipitation at the anode, thereby causing safety risks.

### SUMMARY

In view of the above problems, the present application provides an electrode assembly, a battery cell, a battery, and an electrical device, which can alleviate the problem that the battery capacity under low temperature conditions is greatly reduced and the safety risk may be resulted.

In a first aspect, the present application provides an electrode assembly, comprising:
a plurality of electrode plates, each of the plurality of electrode plates having a first side and a second side which are oppositely arranged along a first direction, and at least one of the first side and the second side being provided with a tab; and
a separator, arranged alternately with the plurality of electrode plates.

The separator is configured to be thermally insulated on at least one of the first side and the second side; and/or
the separator is configured to be thermally insulated on an outermost layer of the plurality of electrode plates.

In the above electrode assembly, on the one hand, by configuring the separator to be thermally insulated on at least one of the first side and the second side of each of the plurality of electrode plates, the heat generated by the electrode assembly is not easy to dissipate from the first side or the second side when the battery in normal operation, so that the heat can be retained within the electrode assembly, and then the temperature of the battery cell can also be raised even when the battery is in a low temperature environment.

On the other hand, by configuring the separator to be thermally insulated on the outermost layer of the plurality of electrode plates, the heat generated by the electrode assembly is not easy to dissipate from the outermost layer of the plurality of electrode plates when the battery in normal operation, so that the heat can be retained within the electrode assembly, and then the temperature of the battery cell can also be raised even when the battery is in a low temperature environment.

In some embodiments, at least one of the plurality of electrode plates comprises at least one of a high thermal resistance alloy substrate, and the high thermal resistance alloy substrate comprises at least one of a stainless steel, an iron-nickel alloy, an iron-aluminum alloy, an iron-nickel-manganese alloy, a nickel-manganese alloy, a nickel-manganese-aluminum alloy.

The use of a high thermal resistance alloy substrate can increase the impedance of the electrode plate, so that the heat generated by the battery cell itself increases, and the thermal conductivity of the high thermal resistance alloy substrate is low, thereby enabling the heat dissipation to be little.

In some embodiments, the separator comprises a base membrane and a first thermal insulation layer, and the first thermal insulation layer is arranged on at least one side edge of the base membrane along the first direction; and /or
the first thermal insulation layer is arranged on the base membrane which is arranged on the outermost layer of the plurality of electrode plates.

By disposing the first thermal insulation layer on the base membrane, the thermal insulation effect of the separator can be realized, which can simplify the structure and manufacturing process.

In some embodiments, in case that the first thermal insulation layer is arranged on at least one side edge of the base membrane along the first direction, an orthographic projection of the first thermal insulation layer along a second direction onto the base membrane has no overlapping area with an orthographic projection of the electrode plate onto the base membrane.

The first direction is perpendicular to the second direction.

Considering the separator also requires having micropores for charged ions to pass through, therefore, the orthographic projection of thermal insulation layer onto the base membrane and the orthographic projection of the electrode plate onto base membrane are configured to have no overlapping area, in this way, the impact of the first thermal insulation layer on the passage of charged ions can be reduced to ensure the performance of the battery cell.

In some embodiments, in case that the first thermal insulation layer is arranged on at least one side edge of the base membrane along the first direction, an orthographic projection of the first thermal insulation layer along the second direction onto the base membrane forms a thermal insulation region, and a thickness of the separator in the thermal insulation region is greater than a thickness of the separator in other regions except the thermal insulation region.

By constructing the thickness of the separator in the thermal insulation region to be greater than the thickness of the separator in other regions except the thermal insulation region, the separator on the first side or the second side of the plurality of electrode plates can be converged, specifically, the distance between the plurality of separator segments on the first side or the second side of the plurality of electrode plates is reduced, and the convergence can block the heat escape from the first side or the second side, thereby reducing the heat loss.

In some embodiments, in case that the first thermal insulation layer is arranged on at least one side edge of the base membrane along the first direction, the separator comprises a plurality of separator segments, the plurality of separator segments and the plurality of electrode plates are arranged alternately, the first thermal insulation layer comprises a plurality of thermal insulating segments, and each of the plurality of thermal insulating segments is arranged on a side edge of a corresponding one of the plurality of separator segments along the first direction.

Since the plurality of separator segments and the plurality of electrode plates are arranged alternately, the plurality of separator segments can be arranged layer by layer in the thickness direction of the base membrane, the corresponding plurality of thermal insulating segments can be arranged layer by layer. Therefore, it is possible to combine the functions of the thermal insulating segments to further reduce the escape of heat, so as to increase the temperature of the battery cells.

In some embodiments, at least two adjacent thermal insulating segments located on a same side along the first direction are connected to each other.

In this way, heat can be prevented from escaping from the gap between every adjacent the two separator segments.

In some embodiments, at least two adjacent thermal insulating segments located on the same side along the first direction are connected to each other by thermocompression.

The thermal insulating segments can be connected more tightly by means of thermocompression connection.

In some embodiments, in case that the first thermal insulation layer is arranged on the base membrane which is arranged on the outermost layer of the plurality of electrode plates, the separator comprises a first separator and a second separator, the base membrane comprises a first base membrane and a second base membrane, the first separator has a first base membrane, and the second separator has the second base membrane;
the first separator and the plurality of electrode plates are arranged alternately to form an electrode unit, and the second separator is wound at an outer side of the electrode unit; and
the first thermal insulation layer is arranged on the second base membrane.

In this way, the first thermal insulation layer can be arranged at the outermost layer of the electrode unit, thereby reducing the dissipation of the heat generated by the electrode unit and increasing the temperature of the battery cell.

In some embodiments, an orthographic projection of the first thermal insulation layer along the second direction onto the base membrane forms a thermal insulation region, the separator further comprises a second thermal insulation layer, and the second thermal insulation layer is arranged on other regions of the base membrane except the thermal insulation region;
in which, a thickness of the second thermal insulation layer is smaller than a thickness of the first thermal insulation layer, and the first direction is perpendicular to the second direction.

By arranging the second insulation layer in other regions except the thermal insulation region, the dissipation of the heat generated by the electrode assembly can be further reduced, and because the separator also requires having micropores for the charged ions to pass through, the construction of the thickness of the second thermal insulation layer to be smaller than the thickness of the first thermal insulation layer can reduce the blocking of the micropores and ensure the performance of the battery cell.

In some embodiments, the thickness of the first thermal insulation layer is between 5 mm and 100 mm.

In some embodiments, in case that the first thermal insulation layer is arranged on the base membrane which is arranged on the outermost layer of the plurality of electrode plates, the first thermal insulating layer has a thermal insulation material configured for thermal insulation and a binder; and
a content of the binder accounts for < 20% by weight of the first thermal insulation layer.

Because the first thermal insulation layer is located at the outermost layer of the plurality of electrode plates, and the area of the outermost layer of the plurality of electrode plates is large, the weight percentage of binder can be appropriately reduced, and the weight percentage of the thermal insulation material can be increased accordingly, so as to improve the thermal insulation effect.

In some embodiments, in case that the first thermal insulation layer is arranged on at least one side edge of the base membrane along the first direction, the first thermal insulating layer has a thermal insulation material for thermal insulation and a binder; and
a content of the binder accounts for < 50% by weight of the first thermal insulation layer.

Since the first thermal insulation layer is arranged on at least one side edge of the base membrane along the first direction and has a relatively small occupied area, the increase of the weight percentage of the binder can improve the connection tightness between the multiple thermal insulating segments when the plurality of thermal insulating segments are connected with each other, thereby improving the thermal insulation effect.

In some embodiments, the separator has a thermal insulation material for thermal insulation, and the thermal insulation material comprises a oxide, a nitride, or a combination thereof.

In some embodiments, the oxide comprises silicon oxide, niobium oxide, titanium oxide, aluminum oxide, or a combination thereof.

In some embodiments, the nitride comprises silicon nitride, niobium nitride, titanium nitride, aluminum nitride, or a combination thereof.

In some embodiments, the separator has a thermal insulation material for thermal insulation and a binder.

By arrangement of the thermal insulation material, it is realized that the separator is thermally insulated on at least one of the first side and the second side and thermally insulated on an outermost layer of the plurality of electrode plates, which can ensure the thermal insulation effect and stabilize the thermal insulation effect. Moreover, the thermal insulation materials can be bonded and fixed by using the binder, which improves the tightness between the thermal insulation materials and is beneficial to enhance the thermal insulating effect.

In a second aspect, the present application provides a battery cell, comprising the electrode assembly according to any of the above embodiments.

In the above battery cell, on the one hand, by configuring the separator to be thermally insulated on at least one of the first side and the second side of each of the plurality of electrode plates, the heat generated by the electrode assembly is not easy to dissipate from the first side or the second side when the battery in normal operation, so that the heat can be retained within the electrode assembly, and then the temperature of the battery cell can also be raised even when the battery is in a low temperature environment.

On the other hand, by configuring the separator to be thermally insulated on the outermost layer of the plurality of electrode plates, the heat generated by the electrode assembly is not easy to dissipate from the outermost layer of the plurality of electrode plates when the battery in normal operation, so that the heat can be retained within the electrode assembly, and then the temperature of the battery cell can also be raised even when the battery is in a low temperature environment.

In some embodiments, the battery cell further comprises a casing, the casing has an accommodation cavity, and the electrode assembly is disposed in the accommodation cavity;
a third thermal insulation layer is arranged on a cavity wall of the accommodating cavity.

By arranging the third thermal insulation layer on the cavity wall of the accommodating cavity, it is possible to prevent heat from escaping from the casing.

In some embodiments, the battery cell further comprises a casing and an insulating layer, the casing has an accommodation cavity, the electrode assembly is disposed in the accommodation cavity, the insulating layer disposed between the electrode assembly and a cavity wall of the accommodation cavity; and
the insulating layer comprises an insulating base layer and a fourth thermal insulation layer, and the fourth thermal insulation layer is arranged on the insulating base layer.

By arranging the fourth thermal insulation layer on the insulating base membrane, another layer of thermal insulation layer can be added outside the electrode assembly, which can cooperate with the separator to achieve a double thermal insulation effect.

In a second aspect, the present application provides a battery, comprising the battery cell according to any of the above embodiments.

In the above battery, on the one hand, by configuring the separator to be thermally insulated on at least one of the first side and the second side of each of the plurality of electrode plates, the heat generated by the electrode assembly is not easy to dissipate from the first side or the second side when the battery in normal operation, so that the heat can be retained within the electrode assembly, and then the temperature of the battery cell can also be raised even when the battery is in a low temperature environment.

On the other hand, by configuring the separator to be thermally insulated on the outermost layer of the plurality of electrode plates, the heat generated by the electrode assembly is not easy to dissipate from the outermost layer of the plurality of electrode plates when the battery in normal operation, so that the heat can be retained within the electrode assembly, and then the temperature of the battery cell can also be raised even when the battery is in a low temperature environment.

In a second aspect, the present application provides an electrical device, comprising the battery according to any of the above embodiments.

In the above electrical device, on the one hand, by configuring the separator to be thermally insulated on at least one of the first side and the second side of each of the plurality of electrode plates, the heat generated by the electrode assembly is not easy to dissipate from the first side or the second side when the battery in normal operation, so that the heat can be retained within the electrode assembly, and then the temperature of the battery cell can also be raised even when the battery is in a low temperature environment.

On the other hand, by configuring the separator to be thermally insulated on the outermost layer of the plurality of electrode plates, the heat generated by the electrode assembly is not easy to dissipate from the outermost layer of the plurality of electrode plates when the battery in normal operation, so that the heat can be retained within the electrode assembly, and then the temperature of the battery cell can also be raised even when the battery is in a low temperature environment.

The above description is only a summary of the technical solutions of the present application. To make the technical means of the present application better understood and implemented according to the contents of the description, and in order to make the above and other purposes, features and advantages of the present application more obvious and understandable, the specific embodiments of the present application are described in details hereinbelow.

### BRIEF DESCRIPTION OF DRAWINGS

Upon reading the following detailed description of the preferred embodiments, other advantages and benefits will become apparent to those skilled in the art. The drawings are only for the purpose of illustrating the preferred embodiments and are not to be considered as limiting the present application. Moreover, same reference numerals are used to denote the same components throughout the drawings. In the attached figures:
FIG. 1 is a structural schematic diagram of a vehicle provided by some embodiments of the present application;
FIG. 2 is an exploded diagram of a battery provided by some embodiments of the present application;
FIG. 3 is an exploded structural schematic diagram of a battery cell in some embodiments of the present application;
FIG. 4 is a structural schematic diagram of an electrode assembly of some embodiments of the present application;
FIG. 5 is a structural schematic diagram of an electrode assembly of other embodiments of the present application;
FIG. 6 is a cross-sectional schematic structural diagram of a separator in the electrode assembly shown in FIG. 4;
FIG. 7 is a cross-sectional schematic structural diagram of an electrode assembly of some embodiments of the present application;
FIG. 8 is a cross-sectional schematic structural diagram of an electrode assembly of other embodiments of the present application;
FIG. 9 is a cross-sectional schematic structural diagram of a separator in some embodiments of the present application;
FIG. 10 shows a temperature rise curve at a bottom of a battery cell of Example 1;
FIG. 11 shows the temperature rise curve at a bottom of comparative example 1 battery cell;
FIG. 12 shows a temperature rise curve at a bottom of a battery cell 20 of Example 2;
FIG. 13 shows a temperature rise curve at a bottom of a battery cell 20 of Example 3;
FIG. 14 shows a temperature rise curve at a bottom of a battery cell of Example 4;
FIG. 15 shows a temperature rise curve at a bottom of a battery cell of Example 5;
FIG. 16 shows a temperature rise curve at a bottom of a battery cell of Example 6;
FIG. 17 shows a temperature rise curve at a bottom of a battery cell of Example 7;
FIG. 18 shows a temperature rise curve at a bottom of a battery cell of Example 8; and
FIG. 19 shows a temperature rise curve at a bottom of a battery cell of Example 9.

The reference numerals in the specific embodiment are as follows:
vehicle 1000;
battery 100;
controller 200;
motor 300;
cabinet 10;
first part 11, second part 12;
battery cell 20;
end cover 21, electrode terminal 211, casing body 22, electrode assembly 23, tab 231, electrode plate 232, separator 233, first separator 2331, second separator 2332, base membrane 2333, first thermal insulation layer 2334, separator segment 2335, second thermal insulation layer 2336, casing 24, and accommodation cavity 241.

### DETAILED DESCRIPTION OF THE EMBODIMENTS

Embodiments of the technical solutions of the present application will be described in detail below in conjunction with the accompanying drawings. The following embodiments are only used to illustrate the technical solution of the present application more clearly, and therefore are only exemplary, rather than limiting the protection scope of the present application.

Unless otherwise defined, all technical and scientific terms used herein have the same meaning as commonly understood by those skilled in the art of the application; the terms used herein are only for the purpose of describing specific embodiments, and are not intended to limit the present application; the terms "comprising" and "having" and any variations thereof in the specification and claims of the present application and the description of the drawings are intended to cover a non-exclusive inclusion.

In the description of the embodiments of the present application, the technical terms "first" and "second" are only used to distinguish different objects, and should not be understood as indicating or implying relative importance or implicitly indicating the number, specific order, or primary-secondary relationship of the indicated technical parameters. In the description of the embodiments of the present application, "plurality" means two or more, unless otherwise specifically defined.

Reference to "embodiment" herein means that a specific parameter, structure, or feature described in connection with the embodiments may be included in at least one embodiment of the present application. The occurrences of this phrase in various places in the specification are not necessarily all referring to the same embodiment, nor are separate or alternative embodiments which are mutually exclusive of other embodiments. It is understood explicitly and implicitly by those skilled in the art that the embodiments described herein can be combined with other embodiments.

In the description of the embodiment of the present application, the term "and/or" is only an association relationship describing associated objects, which means that three kinds of relationships can be included, for example, A and/or B may mean the following conditions: A exists alone, both A and B exist at the same time, and B exists alone. In addition, the character "/" in the present application. generally indicates that the associated objects have an "or" relationship.

In the description of the embodiments of the present application, the term "multiple" refers to more than two (including two), similarly, "multiple groups" refers to two or more groups (including two groups), and "multiple pieces" refers to is more than two pieces (including two pieces).

In the description of the embodiments of the present application, the technical terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like indicate the orientation or positional relationship based on the drawing's orientation or positional relationship is only for the convenience of describing the embodiments of the present application and simplifying the description, and does not indicate or imply that the device or element referred to must have a specific orientation, be constructed, or operated in such a specific orientation, and therefore cannot be understood as an limitation to embodiments of the present application.

In the description of the embodiments of the present application., unless otherwise clearly specified and limited, technical terms such as "installation", "connection", "attachment", "fixation", and the like should be interpreted in a broad sense, for example, it can be a fixed connection, or a detachable connection, or integration as a while; it can also be a mechanical connection, or an electrical connection; it can be a direct connection, or an indirect connection through a medium, and it can be the internal communication of two components or the interaction relationship between two components. Those skilled in the art can understand the specific meanings of the above terms in embodiments of the present application according to specific situations.

Along with the continuous progress of science and technology and the continuous improvement of people's material requirements, more and more electronic devices select lithium ion batters which are advantageous in high working voltage, high energy density, long cycle life, no memory effect, and small volume as the main power source. In recent years, new energy industry development plan has been continuously optimized and promoted domestically, making the demand for power batteries bound increase significantly.

It is well known that the use of lithium-ion batteries is greatly affected by temperature. Usually, the charging capacity is reduced in low temperature environment, and the capacity cannot be fully utilized, especially in cold winter, the phenomenon of loss in the capacity of the battery active material is more prominent, and the voltage platform is reduced, resulting in loss of battery energy density. Moreover, at low temperature environment, the electronic conductance and ion conductance of lithium-ion batteries decrease, and the kinetics performance drop sharply, resulting in lithium precipitation during high-rate charging, deterioration of the battery interface, and serious safety hazards.

In view of this, in order to make the power battery system work in a suitable temperature range as much as possible, and to avoid too fast heat transfer between the internal environment of the lithium ion battery and the external environment of the battery, which would otherwise cause the internal temperature of the battery to be too low, the current battery insulation adopt various technical solutions. A first mostly used technical solution is to arrange a hollow/filled insulation layer in the battery cabinet. However, in case that a vehicle runs at a high speed at a low external environment temperature, making the external low temperature air of the battery cabinet have a high flow rate, the first insulation design, however, cannot effectively alleviate the heat transfer rate between the internal environment and the external environment of the battery cabinet, which makes the temperature inside the battery cabinet two low, in turn affects the performance of the battery.

A second technical solution is to arrange a heating device in a battery pack to heat the inside of the battery pack at a low temperature. The second heating solution requires adopting a phase change heating material, a heater, or a heating mantle. However, such heating method requires adding additional devices that occupy the layout space inside the battery, and requires an additional heating controller, and has an impact on the energy density and safety of the battery system.

Therefore, based on the above technical solution, the applicant considers that the development should be focused on the heat preservation and temperature rise of a single battery cell.

At present, a third technical solution was come into being, which adopts high-conductivity electrolyte and graphite inside the battery cell, but the use of high-conductivity electrolyte and graphite will undoubtedly greatly increase the cost.

In order to alleviate the problem that the battery capacity under low temperature conditions is greatly reduced and the safety risk may be resulted and to avoid greatly increasing the cost,_the applicant has developed an electrode assembly, including a plurality of electrode plates and a separator. Each of the plurality of electrode plates has a first side and a second side which are oppositely arranged along a first direction. At least one of the first side and the second side is provided with a tab. The separator is arranged alternately with the plurality of electrode plates. The separator is configured to be thermally insulated on at least one of the first side and the second side. The separator is configured to be thermally insulated on an outermost layer of the plurality of electrode plates.

In such an electrode assembly, on the one hand, due that the separator is configured to be thermally insulated on at least one of the first side and the second side of each of the plurality of electrode plates, the heat generated by the electrode assembly is not easy to dissipate from the first side or the second side when the battery in normal operation, so that the heat can be retained within the electrode assembly, and then the temperature of the battery cell can also be raised even when the battery is in a low temperature environment.

On the other hand, by configuring the separator to be thermally insulated on the outermost layer of the plurality of electrode plates, the heat generated by the electrode assembly is not easy to dissipate from the outermost layer of the plurality of electrode plates when the battery in normal operation, so that the heat can be retained within the electrode assembly, and then the temperature of the battery cell can also be raised even when the battery is in a low temperature environment.

The electrode assembly disclosed in embodiments of the present application is applied to a battery cell. The battery cells disclosed in embodiments of the present application can be used, but not limited to, in electrical devices such as vehicles, ships, or aircrafts. The battery cell and the battery disclosed in the present application and the like can be used to form the power supply system of the electrical device, which is conducive to alleviating and automatically adjusting the deterioration of the expansion force of the battery cell, supplementing the consumption of the electrolyte, and improving the stability of battery performance and the service life of the battery.

Embodiments of the present application provides an electrical device that uses battery as the power source, and the electrical device can be, but not limited to, a mobile phone, a tablet, a notebook computer, an electric toy, an electric tool, a battery car, an electric car, a ship, a spacecraft, and the like. The electric toy may include a fixed or mobile electric toy, such as a game console, an electric car toy, an electric boat toy, an electric airplane toy, and the like; and the spacecraft may include an airplane, a rocket, a space shuttle, a spaceship, and the like.

In the following embodiments, for convenience of description, an electrical device according to an embodiment of the present application is taken as an example for description.

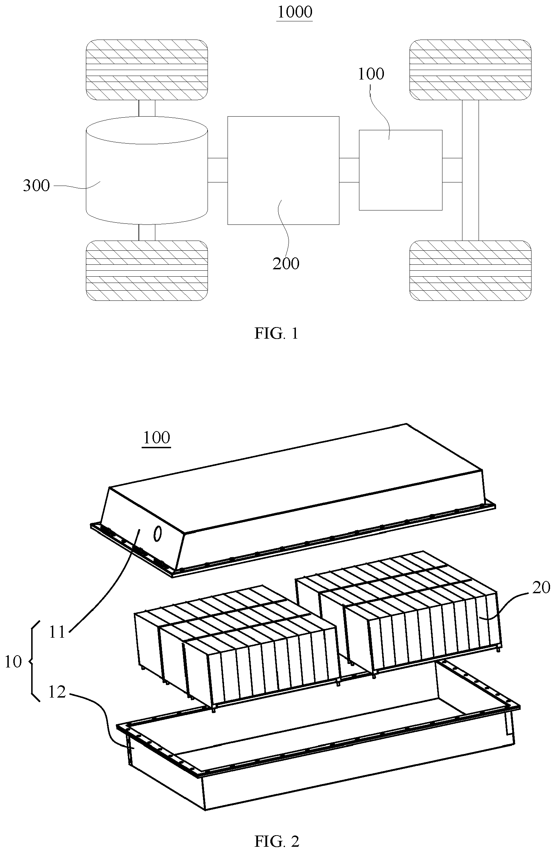

Referring to FIG. 1, which is a schematic structural diagram of a vehicle 1000 provided by some embodiments of the present application. The vehicle 1000 can be a fuel vehicle, a gas vehicle, or a new energy vehicle, and the new energy vehicle can be a pure electric vehicle, a hybrid vehicle, or an extended-range vehicle. The inside of the vehicle 1000 is provided with a battery 100, and the battery 100 may be provided at the bottom, head, or tail of the vehicle 1000. The battery 100 can be used for power supply of the vehicle 1000, for example, the battery 100 can be used as an operating power source of the vehicle 1000. The vehicle 1000 may further include a control device 200 and a motor 300, and the control device 200 is used to control the battery 100 to provide power to the motor 300, for example, for starting, navigating, and running the vehicle 1000.

In some embodiments of the present application, the battery 100 can not only be used as the operating power source for the vehicle 1000, but can also be used as a driving power source for the vehicle 1000, replacing or partially replacing a fuel oil or a natural gas to provide driving power for the vehicle 1000.

Referring to FIG. 2, which is an exploded view of a battery 100 provided by some embodiments of the present application. The battery 100 includes a cabinet 10 and battery cells 20 accommodated in the cabinet 10. The cabinet 10 is used to provide an accommodating space for the battery cells 20, and the cabinet 10 may adopt various structures. In some embodiments, the cabinet 10 may include a first part 11 and a second part 12, the first part 11 and the second part 12 cover each other, and the first part 11 and the second part 12 jointly define an accommodation space for accommodating the battery cells 20. The second part 12 can be a hollow structure with one side open, the first part 11 can be a plate-shaped structure, and the first part 11 covers the opening side of the second part 12, so that the first part 11 and the second part 12 jointly define the accommodation space. Or alternatively, both the first part 11 and the second part 12 can be hollow structures with one side opening, and the opening side of the first part 11 is covered by the opening side of the second part 12. It can be understood that the cabinet 10 formed by the first part 11 and the second part 12 can be in various shapes, such as a cylinder, a cuboid, and the like.

In the battery 100, the number of the battery cells 20 may be a plural. The plurality of battery cells 20 may be connected in series, in parallel or in a combined connection manner. The combined connection manner means that the plurality of battery cells 20 are connected in series as well as in parallel. The plurality of battery cells 20 can be directly connected in series, in parallel, or in a combined connection manner, then the plurality of battery cells 20 as a whole are accommodated in the cabinet 10. It can be understood that the battery 100 can also be as follows: a plurality of battery cells 20 are firstly connected in series or in parallel or in a combined connection manner to form a battery module, and then a plurality of the battery modules are connected in series or in parallel or in a combination connection manner to form a whole, which is accommodated in the cabinet 10. The battery 100 may also include other structures, for example, the battery 100 may also include a bus component for realizing electrical connection between multiple battery cells 20.

Each battery cell 20 may be a secondary battery or a primary battery; or may also be a lithium battery, a lithium-sulfur battery, a sodium-ion battery or a magnesium-ion battery, but is not limited thereto. The battery cell 20 may be in the form of a cylinder, a flat body, a cuboid, or other shapes.

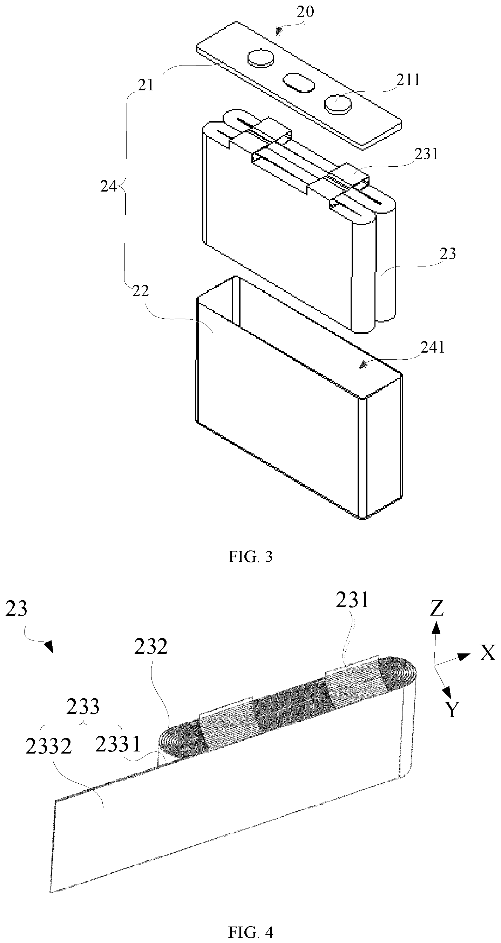

Referring to FIG. 3, which is a schematic diagram of an exploded structure of a battery cell 20 provided in some embodiments of the present application. The battery cell 20 refers to a smallest unit constituting a battery. As shown in FIG. 3, the battery cell 20 includes an end cover 21, a casing 22, an electrode assembly 23, and other functional components.

The end cover 21 refers to a component that covers the opening of the casing 22 to isolate the internal environment of the battery cell 20 from the external environment. Without limitation, the shape of the end cover 21 can be adapted to the shape of the casing 22 to fit the casing 22. Optionally, the end cover 21 can be made of a material (such as aluminum alloy) with a certain hardness and strength, so that the end cover 21 is not easily deformed when being squeezed and collided, so that the battery cell 20 can have a higher structural strength and safety performance can also be improved. Functional components such as electrode terminals 211 may be provided on the end cover 21. The electrode terminal 211 can be used for electrical connection with the electrode assembly 23 for outputting or inputting electric energy of the battery cell 20. In some embodiments, the end cover 21 may also be provided with a pressure relief mechanism for releasing the internal pressure when the internal pressure or temperature of the battery cell 20 reaches a threshold value. The material of the end cover 21 can also be various, for example, copper, iron, aluminum, stainless steel, aluminum alloy, plastic, and the like, which is not particularly limited in this embodiment of the present application. In some embodiments, an insulator can be provided inside the end cover 21, and the insulator can be used to isolate the electrical connection components in the casing 22 from the end cover 21 to reduce the risk of short circuit. Exemplarily, the insulator may be a plastic, a rubber, or the like.

The casing 22 is a component used to cooperate with the end cover 21 to form an internal environment of the battery cell 20, and the formed internal environment can be used to accommodate the electrode assembly 23, an electrolyte, and other components. The casing 22 and the end cover 21 can be independent components, and an opening can be defined in the casing 22, and the internal environment of the battery cell 20 can be formed by making the end cover 21 cover the opening of the casing. Without limitation, the end cover 21 and the casing 22 can also be integrated. Specifically, the end cover 21 and the casing 22 can form a common connection surface before other components are inserted into the casing. When the inside of the casing 22 needs to be encapsulated, the casing 22 is covered by the end cover 21. The casing 22 can be in various shapes and sizes, such as cuboid, cylinder, hexagonal prism, and the like. Specifically, the shape of the casing 22 can be determined according to the specific shape and size of the electrode assembly 23. The casing 22 can be made of various materials, such as copper, iron, aluminum, stainless steel, aluminum alloy, plastic, and the like, which is not particularly limited in embodiments of the present application.

The electrode assembly 23 is a component in the battery cell 100 where the electrochemical reaction occurs. One or more electrode assemblies 23 may be contained in the casing 22. The electrode assembly 23 is mainly formed by winding or stacking the cathode plate and the anode plate, and usually a separator is provided between the cathode plate and the anode plate. The parts of the cathode plate and the anode plate with active material constitute the main body of the electrode assembly 23, and the parts of the cathode plate and the anode plate without active material respectively constitute tabs 231. The cathode tab and the anode tab can be located at one end of the main body together or at two ends of the main body respectively. During the charging and discharging process of the battery, the cathode active material and the anode active material react with the electrolyte, and the tabs 231 are connected to the electrode terminals to form a current loop.

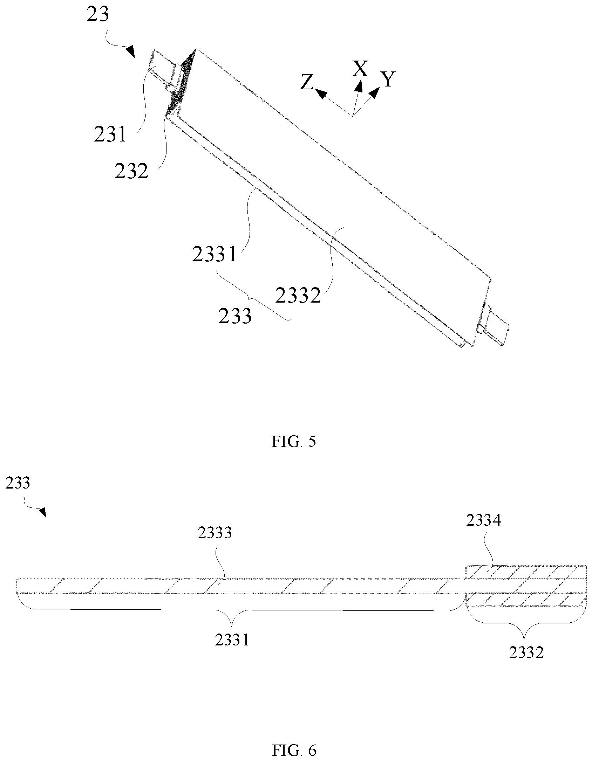

According to some embodiments of the present application, referring to FIG. 4 and FIG. 5, FIG. 4 is a schematic structural diagram of an electrode assembly according to some embodiments of the present application, and FIG. 5 is a schematic structural diagram of an electrode assembly according to other embodiments of the present application. The present application provides an electrode assembly 23. The electrode assembly 23 comprises a plurality of electrode plates 232 and a separator 233. Each of the plurality of electrode plates 232 has a first side and a second side which are oppositely arranged along a first direction, at least one of the first side and the second side is provided with a tab. The separator 233 is configured to be thermally insulated on at least one of the first side and the second side, and/or the separator 233 may also be configured to be thermally insulated on an outermost layer of the plurality of electrode plates 232.

The plurality of electrode plates 232 comprises at least one cathode plate and at least one anode plate.

The separator 233 is arranged alternately with the plurality of electrode plates 232, which means that the separator 233 is isolated between every two adjacent electrode plates 232, specifically, the separator 233 is isolated between the cathode plate and the anode plate.

The first side and the second side of the plurality of electrode plates 232 are opposite along a first direction, and the first direction may be the width direction of the separator 233, specifically the Z direction as shown in FIG. 4 and FIG. 5.

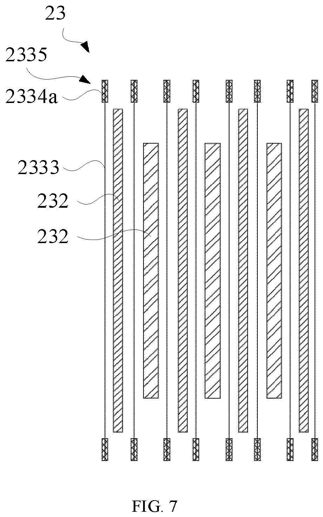

Referring to FIG. 5, the manner that the plurality of electrode plates 232 and the separator 233 constitute the electrode assembly 23 can be a stacking manner, Referring to FIG. 4, the manner that the plurality of electrode plates 232 and the separator 233 constitute the electrode assembly 23 can also be a winding manner, which is not specifically limited herein. Referring to FIG. 6, in both the above two manners, the separator 233 may comprise a first separator 2331 and a second separator 2332, the first separator 2331 is stacked with a plurality of electrode plates 232 to form an electrode unit, and the second separator 2332 is wound around an outer side of the electrode unit. Referring to FIG. 6 and FIG. 7, the first separator 2331 may further comprise a plurality of separator segments 2335, and each of the plurality of separator segments 2335 is used to isolate two adjacent electrode plates 232.

That the separator 233 is configured to be thermally insulated on the outermost layer of the plurality of electrode plates 232 refers to that the separator 233 is thermally insulated on an outside of the outermost electrode plate 232 of the plurality of electrode plates 232.

On the one hand, by configuring the separator 233 to be thermally insulated on at least one of the first side and the second side of each of the plurality of electrode plates 232, the heat generated by the electrode assembly 23 is not easy to dissipate from the first side or the second side when the battery 100 in normal operation, so that the heat can be retained within the electrode assembly 23, and then the temperature of the battery cell 20 can also be raised even when the battery 100 is in a low temperature environment.

On the other hand, by configuring the separator 233 to be thermally insulated on the outermost layer of the plurality of electrode plates 232, the heat generated by the electrode assembly 23 is not easy to dissipate from the outermost layer of the plurality of electrode plates 232 when the battery 100 in normal operation, so that the heat can be retained within the electrode assembly 23, and then the temperature of the battery cell 20 can also be raised even when the battery 100 is in a low temperature environment.

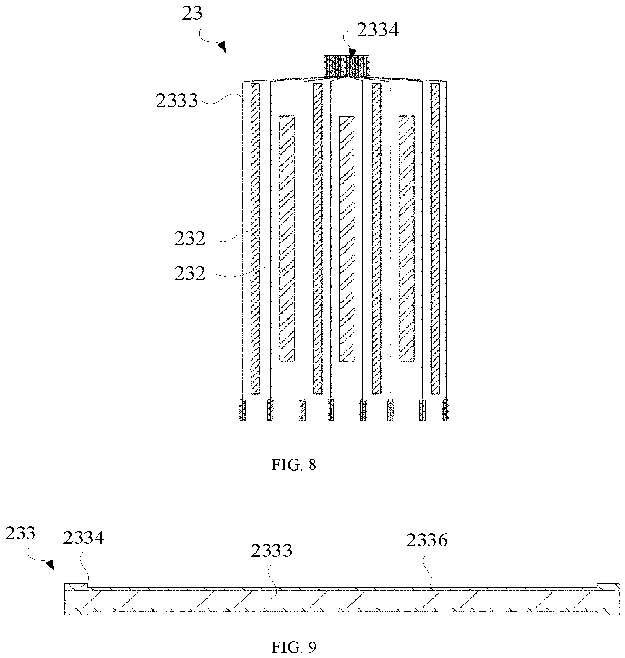

Referring to FIG. 6 and FIG. 9, according to some embodiments of the present application, the separator 233 comprises a base membrane 2333 and a first thermal insulation layer 2334, and the first thermal insulation layer 2334 is arranged on at least one of a first side edge and a second side edge of the base membrane 2333, and/or the first thermal insulation layer 2334 is arranged on the base membrane 2333, which is arranged on the outermost layer of the plurality of electrode plates 232.

The base membrane 2333 is a main part of the separator 233 and is used to form a substrate layer. The base membrane 2333 can be a polypropylene or polyethylene microporous membrane.

The first heat-insulating layer 2334 is a material layer with a heat-insulating function and can be arranged on the base membrane 2333 by coating, sputtering, infiltration, and the like, which is not limited here.

By disposing the first thermal insulation layer 2334 on the base membrane 2333, the thermal insulation effect of the separator 233 can be realized, which can simplify the structure and manufacturing process.

Referring to FIG. 9, optionally, the first thermal insulation layer 2334 may be arranged on one side edge of the base membrane 2333 along a width direction thereof, or may be arranged on both side edges of the base membrane 2333 along the width direction, and the arrangement of first thermal insulation layer 2334 on a same side can be intermittent arrangement along the circumferential direction of the base membrane 2333, or continuous arrangement along the circumferential direction of the base membrane 2333. Herein, the width direction of the base membrane 2333 is the first direction.

Referring to FIG. 6, optionally, the first thermal insulation layer 2334 can be covered on the surface of one side of the base membrane 2333 which is arranged at the outermost layer of the plurality of electrode plates 232, or can be covered on surfaces of both sides of the base membrane 2333 which is arranged at the outermost layer of the plurality of electrode plates 232, or can be covered on a portion of the surface of one side of the base membrane 2333 which is arranged at the outermost layer of the plurality of electrode plates 232.

In other embodiments, in addition to the above way of arrangement of the first thermal insulation layer 2334 for thermal insulation, the effect of thermal insulation can also be realized through the base membrane material in the local area of the separator 233, thickening improvement, and the like.

Referring to FIG. 7 and FIG. 8, according to some embodiments of the present application, in case that the first thermal insulation layer 2334 is arranged on at least one side edge of the base membrane 2333 along the first direction, an orthographic projection of the first thermal insulation layer 2334 along a second direction onto the base membrane 2333 has no overlapping area with an orthographic projection of the electrode plate 232 on the base membrane 2333, in which, the first direction is perpendicular to the second direction.

Specifically, the second direction is an X direction or a Y direction shown in FIG. 4 and FIG. 5.

Considering the separator 233 also requires having micropores for charged ions to pass through, the orthographic projection of thermal insulation layer 2324 onto the base membrane 2333 and the orthographic projection of the electrode plate 232 onto base membrane 2333 are configured to have no overlapping area, in this way, the impact of the first thermal insulation layer 2334 on the passage of charged ions can be reduced to ensure the performance of the battery cell 20.

According to some embodiments of the present application, the orthographic projection of the first thermal insulation layer 2334 along the second direction onto the base membrane 2333 forms a thermal insulation region, and a thickness of the separator 233 in the thermal insulation region is greater than a thickness of the separator 233 in other regions except the thermal insulation region.

It should be noted that other regions in the base membrane 2333 of the separator 233 may also be provided with other coating layers, such as coating ceramics, polymers, and the like.

By constructing the thickness of the separator 233 in the thermal insulation region to be greater than the thickness of the separator 233 in other regions except the thermal insulation region, the separator 233 on the first side or the second side of the plurality of electrode plates 232 can be converged, specifically, the distance between the plurality of separator segments 2335 on the first side or the second side of the plurality of electrode plates 232 is reduced, and the convergence can block the heat escape from the first side or the second side, thereby reducing the heat loss.

Referring to FIG. 7 and FIG. 8, according to some embodiments of the present application, in case that the first thermal insulation layer 2334 is arranged on at least one side edge of the base membrane 2333 along the first direction, the separator 233 comprises a plurality of separator segments 2335, and the plurality of separator segments 2335 and the plurality of electrode plates arranged alternately. The first thermal insulation layer 2334 comprises a plurality of thermal insulating segments 2334a, and each of the plurality of thermal insulating segment 2334a is arranged on a side edge of a corresponding one of the plurality of separator segments 2335 along the first direction.

Since the plurality of separator segments 2335 and the plurality of electrode plates are arranged alternately, the plurality of separator segments 2335 can be arranged layer by layer in the thickness direction of the base membrane 2333, the corresponding plurality of thermal insulating segments 2334a can be arranged layer by layer. Therefore, it is possible to combine the functions of the thermal insulating segments 2334a to further reduce the escape of heat, so as to increase the temperature of the battery cells 20.

Optionally, each separator segment 2335 is provided with a corresponding thermal insulating segment 2334a one side edge along the first direction. Optionally, each separator segment 2335 is provided with corresponding thermal insulating segments 2334a on both side edges along the first direction. Optionally, only a part of the separator segment 2335 is provided with a corresponding thermal insulating segment 2334a on one side edge along the first direction. Optionally, only a part of the separator segment 2335 is provided with a corresponding thermal insulating segment 2334a on both side edges along the first direction.

Referring to FIGS. 7 and 8, according to some embodiments of the present application, at least two adjacent separator segments 2335 on a same side along the first direction are connected to each other.

In this way, heat can be prevented from escaping from the gap between every adjacent two separator segments 2335.

Specifically in the embodiment of the present application, at least two adjacent thermal insulating segments 2334a located on a same side along the first direction are connected to each other.

By arranging at least two adjacent thermal insulating segments 2334a on the same side to be connected to each other, the gap between adjacent separator segments 2335 can be eliminated, thus preventing heat from escaping from the gap and in turn increasing the temperature of the battery cell 20

Optionally, all the thermal insulating segments 2334a located on the same side along the first direction are connected to each other.

Referring to FIG. 7 and FIG. 8, according to some embodiments of the present application, at least two adjacent thermal insulating segments 2334a located on the same side along the first direction are connected to each other by thermocompression.

The thermocompression connection of a plurality of thermal insulating segments 2334a means that at least two adjacent thermal insulating segments 2334a are connected through a thermocompression process.

The thermal insulating segments 2334a can be connected more tightly by means of thermocompression connection.

In other embodiments, at least two adjacent thermal insulating segments 2334a can also be connected to each other by fasteners, such as straps, clips, and the like. The adjacent thermal insulating segments 2334a can also be connected to each other by a binder.

Referring to FIG. 4 to FIG. 6, according to some embodiments of the present application, in case that the first thermal insulation layer 2334 is arranged on the base membrane 2333 of the outermost layer of the plurality of electrode plates 232, the separator 233 comprises a first separator 2331 and a second separator 2332, the base membrane 2333 comprises a first base membrane and a second base membrane, the first separator 2331 has a first base membrane, the second separator 2332 has a second base membrane, and the first separator 2331 and the plurality of electrode plates 232 are arranged alternately to form an electrode unit 233, and the second separator 2332 is wound at an outer side of the electrode unit 233. The first thermal insulation layer 2334 is arranged on the second base membrane.

In this way, the first thermal insulation layer 2334 can be arranged at the outermost layer of the electrode unit 233, thereby reducing the dissipation of the heat generated by the electrode unit 233 and increasing the temperature of the battery cell 20.

It should be understood that the second separator 2332 can be wound around the outer side of the electrode unit 233 in a full circle along the circumferential direction of the electrode unit 233, or can be wound in a half circle or other circle numbers along the circumferential direction of the electrode unit 233, which is no limit herein.

Optionally, the first base membrane is integrally formed with the second base membrane. By forming the first base membrane and the second base membrane integrally, the formation manner of the separator 233 can be simplified.

Referring to FIG. 9, according to some embodiments of the present application, an orthographic projection of the first thermal insulation layer 2334 along the second direction onto the base membrane 2333 forms a thermal insulation region, and the separator 233 further comprises a second thermal insulation layer 2336, and the second thermal insulation layer 2336 is arranged on other regions except the thermal insulation region, and the thickness of the second thermal insulation layer 2336 is smaller than a thickness of the first thermal insulation layer 2334.

By arranging the second insulation layer 2336 in other regions except the thermal insulation region, the dissipation of the heat generated by the electrode assembly 23 can be further reduced, and because the separator 233 also requires having micropores for the charged ions to pass through, the construction of the thickness of the second thermal insulation layer 2336 to be smaller than the thickness of the first thermal insulation layer 2334 can reduce the blocking of the micropores and ensure the performance of the battery cell 20.

Optionally, the second thermal insulation layer 2336 can be covered on the surface of one side of the base membrane 2333 in other regions, or can be covered on surfaces of both sides of the base membrane 2333 in other regions, or can be covered on a portion of the surface of one side of the base membrane 2333 in other regions.

According to some embodiments of the present application, the separator 233 has a thermal insulation material for thermal insulation, and the thermal insulation material comprises a oxide, a nitride, or a combination thereof.

The oxide and the nitride have good stability as thermal insulation materials and good thermal insulating effects.

Specifically, the first thermal insulation layer 2334 has a thermal insulation material.

According to some embodiments of the present application, the oxide comprises silicon oxide, niobium oxide, titanium oxide, aluminum oxide, or a combination thereof.

According to some embodiments of the present application, the nitride is selected from silicon nitride, niobium nitride, titanium nitride, aluminum nitride, or a combination thereof.

According to some embodiments of the present application, the separator 233 has a thermal insulation material for thermal insulation and a binder.

By arrangement of the thermal insulation material, it is realized that the separator is thermally insulated on at least one of the first side and the second side and thermally insulated on an outermost layer of the plurality of electrode plates, which can ensure the thermal insulation effect and stabilize the thermal insulation effect. Moreover, the thermal insulation materials can be bonded and fixed by using the binder, which improves the tightness between the thermal insulation materials and is beneficial to enhance the thermal insulating effect.

According to some embodiments of the present application, the binder comprises a polytetrafluoroethylene, a polyvinylidene fluoride, a polymethacrylate, a polyacrylic acid, a polyamide, a polyimide, a sodium alginate, or a combination thereof.

According to some embodiments of the present application, in case that the first thermal insulation layer 2334 is arranged on the base membrane 2333 which is arranged on the outermost layer of the plurality of electrode plates 232, the first thermal insulation layer 2334 has a thermal insulation material configured for thermal insulation and a binder. A content of the binder accounts for ≤ 20% by weight of the first thermal insulation layer.

Because the first thermal insulation layer 2334 is located at the outermost layer of the plurality of electrode plates 232, and the area of the outermost layer of the plurality of electrode plates 232 is large, the weight percentage of binder can be appropriately reduced, and the weight percentage of the thermal insulation material can be increased accordingly, so as to improve the thermal insulation effect.

Optionally, the weight percentage of the binder in the first thermal insulation layer 2334 is 20%, 15%, 10%, or 5%.

According to some embodiments of the present application, in case that the first thermal insulation layer 2334 is arranged on at least one side edge of the base membrane 2333 along the first direction, the first thermal insulation layer 2334 has a thermal insulation material for thermal insulation and a binder. A content of the binder accounts for ≤ 50% by weight of the first thermal insulation layer.

Since the first thermal insulation layer 2334 is arranged on at least one side edge of the base membrane 2333 along the first direction and has a relatively small occupied area, the increase of the weight percentage of the binder can improve the connection tightness between the multiple thermal insulating segments 2334a when the plurality of thermal insulating segments 2334a are connected with each other, thereby improving the thermal insulation effect.

Optionally, the weight percentage of the binder in the first thermal insulation layer 2334 is 50%, 45%, 40%, 35%, 30%, 20%, 15%, 10%, or 5%.

According to some embodiments of the present application, the thickness of the first thermal insulation layer 2334 is about 5 mm to about 100 mm.

When the thickness of the first thermal insulation layer 2334 is about 5 mm to about 100 mm, the thermal insulation effect can be excellent, which can be demonstrated according to experiments described hereinbelow.

Hereinbelow, the present application will be further described for the specific implementation manners in which the first thermal insulation layer 2334 is arranged on at least one side edge of the base membrane 2333 along the width direction thereof, but the technical parameters involved in the technical solution cannot be construed as limitations to the present application.

Example 1: The first thermal insulation layer 2334 is arranged on one side edge of the base membrane 2333 along the width direction thereof.

A current collector of cathode plate and a current collector of the anode plate adopt a copper substrate and an aluminum substrate, respectively. An active material of cathode plate is lithium iron phosphate, and an active material of anode plate is graphite. The first thermal insulation layer 2334 adopts silicon oxide as the thermal insulation material, and the first thermal insulation layer 2334 has a thickness of 20 mm.

The battery cell 20 having the above structure was discharged under a condition of -10°C.

### Test results were as follows:

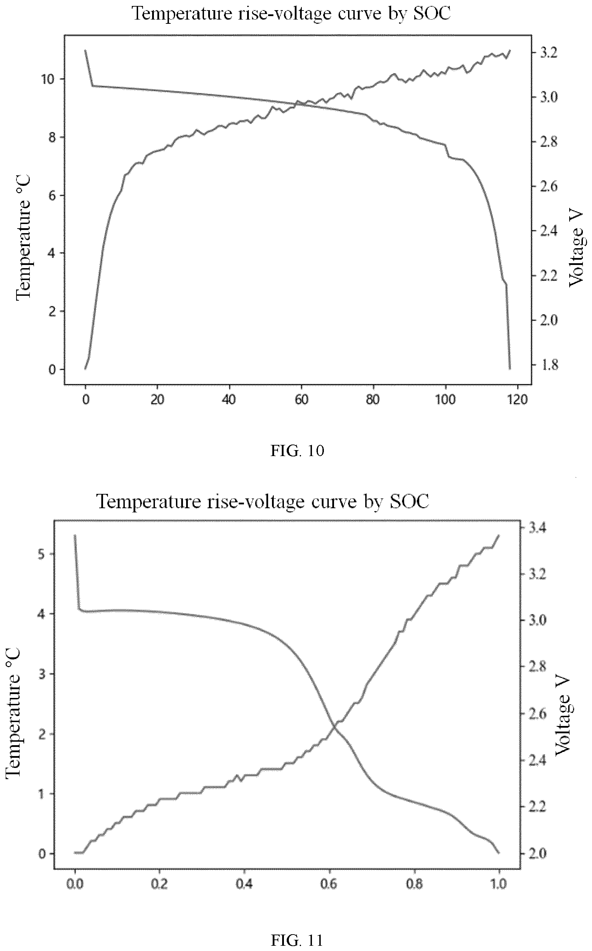

FIG. 10 shows a temperature rise curve at a bottom of the battery cell of Example 1.

It can be seen from FIG. 10 that a maximum temperature rise at the bottom of the battery cell 20 was 10°C.

In addition, the capacity fading rate (fading) of the battery cell 20 was 26.27%.

Comparative Example 1: The separator 233 has no first thermal insulation layer 2334.

A current collector of cathode plate and a current collector of the anode plate adopt a copper substrate and an aluminum substrate, respectively. An active material of cathode plate is lithium iron phosphate, and an active material of anode plate is graphite.

### Test results were as follows:

FIG. 11 shows a temperature rise curve at a bottom of the battery cell of Comparative Example 1.

It can be seen from FIG. 11 that a maximum temperature rise at the bottom of the battery cell 20 was <4°C.

In addition, the capacity fading rate (fading) of the battery cell 20 was 39.81%.

It can be concluded from Comparative Example 1 and Example 1 that when the first thermal insulation layer 2334 adopting silicon oxide as the thermal insulation material is arranged on one side edge of the base membrane 2333 along the width direction thereof, the capacity fading rate of the battery cell 20 in the low temperature environment is reduced, and the temperature rise is also increased. This demonstrates that the first thermal insulation layer 2334 arranged on one side edge of the base membrane 2333 along the width direction provided by the present application can reduce the heat dissipation.

The present application will be further described for the specific implementation manners in which the first thermal insulation layer 2334 is arranged on the base membrane 2333, which is arranged on the outermost layer of the plurality of electrode plates 232, but the technical parameters involved in the technical solution cannot be construed as limitations to the present application.

Example 2: The first thermal insulation layer 2334 is arranged on the base membrane 2333, which is arranged on the outermost layer of the plurality of electrode plates 232.

A current collector of cathode plate and a current collector of the anode plate adopt a copper substrate and an aluminum substrate, respectively. An active material of cathode plate is lithium iron phosphate, and an active material of anode plate is graphite. The first thermal insulation layer 2334 adopts silicon oxide as the thermal insulation material, and the first thermal insulation layer 2334 has a thickness of 20 mm.

The battery cell 20 having the above structure was discharged under a condition of -10°C.

### Test results were as follows:

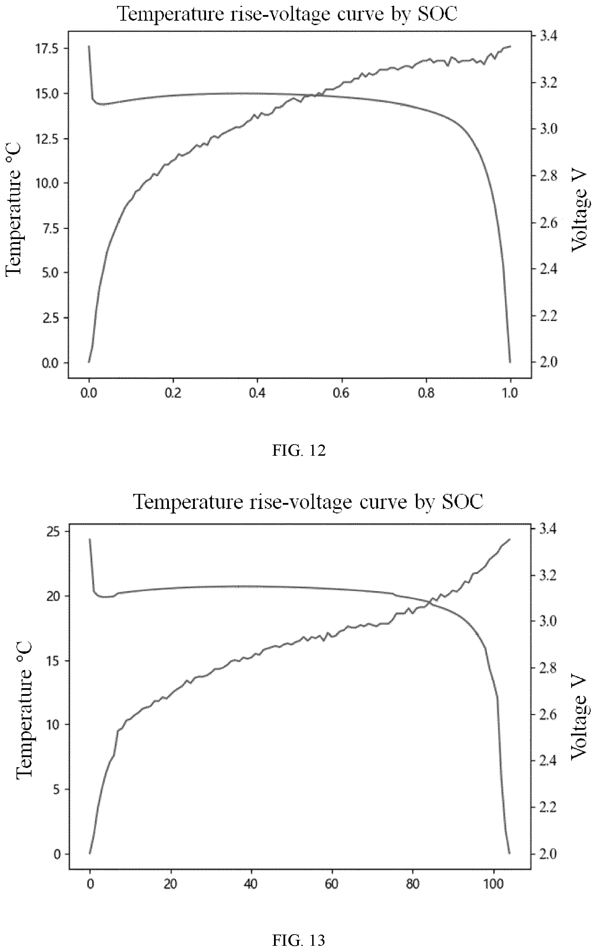

FIG. 12 shows a temperature rise curve at a bottom of the battery cell in Example 2.

It can be seen from FIG. 12 that a maximum temperature rise at the bottom of the battery cell 20 was 17°C to 18°C.

In addition, the capacity fading rate (fading) of the battery cell 20 was 25.2%.

It can be concluded from Comparative Example 1 and Example 2 that when the first thermal insulation layer 2334 adopting silicon oxide as the thermal insulation material is arranged on the base membrane 2333, which is arranged on the outermost layer of the plurality of electrode plates 232, the capacity fading rate of the battery cell 20 in the low temperature environment is reduced, and the temperature rise is also increased. This demonstrates that the arrangement of the first thermal insulation layer 2334 on the base membrane 2333, which is arranged on the outermost layer of the plurality of electrode plates 232 provided by the present application can reduce heat dissipation.

According to some Examples of the present application, at least one of the plurality of electrode plates 232 comprises at least one of a high thermal resistance alloy substrate, and the high thermal resistance alloy substrate comprises at least one of a stainless steel, an iron-nickel alloy, an iron-aluminum alloy, an iron-nickel-manganese alloy, a nickel-manganese alloy, a nickel-manganese-aluminum alloy.

The use of a high thermal resistance alloy substrate can increase the impedance of the electrode plate 232, so that the heat generated by the battery cell 20 itself increases, and the thermal conductivity of the high thermal resistance alloy substrate is low, thereby enabling the heat dissipation to be few.

Optionally, each electrode plate 232 comprises a stainless steel substrate. Optionally, a part of the electrode plate 232 comprises a stainless steel substrate.

The present application will be further described for the specific implementation manners in which the electrode plates 232 adopt stainless steel substrates and the first thermal insulation layer 2334 is arranged on one side edge of the base membrane 2333 along the width direction thereof, but the technical parameters involved in the technical solution cannot be construed as limitations to the present application.

Example 3: Both the cathode plate and the anode plate adopt stainless steel substrates, and the first thermal insulation layer 2334 is arranged on one side edge of the base membrane 2333 along the width direction thereof.

An active material of cathode plate is lithium iron phosphate, and an active material of anode plate is graphite. The first thermal insulation layer 2334 adopts silicon oxide as the thermal insulation material, and the first thermal insulation layer 2334 has a thickness of 20 mm.

The battery cell 20 having the above structure was discharged under a condition of -10°C.

### Test results were as follows:

FIG. 13 shows a temperature rise curve at a bottom of the battery cell in Example 3.

It can be seen from FIG. 13 that a maximum temperature rise at the bottom of the battery cell 20 was 24°C.

In addition, the capacity fading rate (fading) of the battery cell 20 was 19.9%.

It can be concluded from Example 1 and Example 3, under the same condition that the first thermal insulation layer 2334 adopts silicon oxide as the thermal insulation material, the electrode plates adopting the stainless steel substrates can make the battery cell 20 have a smaller capacity fading rate in a low temperature environment and a higher temperature rise. This demonstrates that when the present application contains both technical features that both technical features that the electrode plates 232 adopts stainless steel substrates and that the first thermal insulation layer 2334 is arranged on one side edge of the base membrane 2333 along the width direction thereof, a better effect in reducing the heat dissipation can be obtained.

The present application will be further described for the specific implementation manners in which the electrode plates 232 adopt stainless steel substrates and the first thermal insulation layer 2334 is arranged on the base membrane 2333, which is arranged on the outermost layer of the plurality of electrode plates 232, but the technical parameters involved in the technical solution cannot be construed as limitations to the present application.

Example 4: Both the cathode plate and the anode plate adopt stainless steel substrates, and the first thermal insulation layer 2334 is arranged on the base membrane 2333, which is arranged on the outermost layer of the plurality of electrode plates 232.

An active material of cathode plate is lithium iron phosphate, and an active material of anode plate is graphite. The first thermal insulation layer 2334 adopts silicon oxide as the thermal insulation material, and the first thermal insulation layer 2334 has a thickness of 20 mm.

### Test results were as follows:

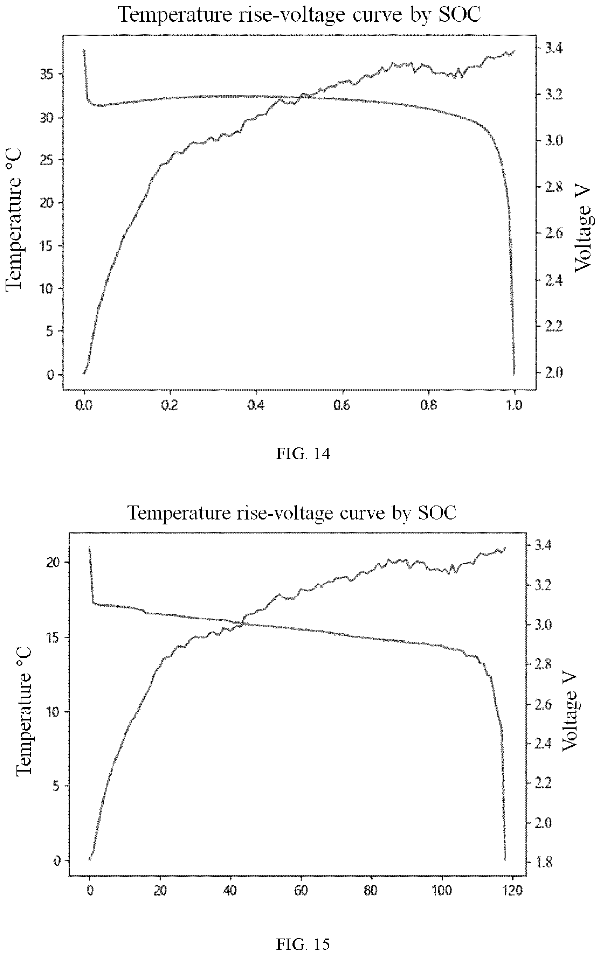

FIG. 14 shows a temperature rise curve at a bottom of the battery cell of Example 4.

It can be seen from FIG. 14 that a maximum temperature rise at the bottom of the battery cell 20 was 37°C.

In addition, the capacity fading rate (fading) of the battery cell 20 was 12.2%.

It can be concluded from Example 2 and Example 4, under the same condition that the first thermal insulation layer 2334 adopts silicon oxide as the thermal insulation material, the electrode plates adopting the stainless steel substrates can make the battery cell 20 have a smaller capacity fading rate in a low temperature environment and a higher temperature rise. This demonstrates that when the present application contains both technical features that the first thermal insulation layer 2334 is arranged on the base membrane 2333, which is arranged on the outermost layer of the plurality of electrode plates 232 and that the electrode plates 232 adopts stainless steel substrates, a better effect in reducing the heat dissipation can be obtained.

In order to further verify the impact of the thermal insulation material of the first thermal insulation layer 2334 on heat dissipation, some specific implementation manners are provided below to further describe the present application, but the technical parameters involved in the technical solution cannot be construed as Limitations on the present application.

Example 5: Both the cathode plate and the anode plate adopt stainless steel substrates, and the first thermal insulation layer 2334 is arranged on one side edge of the base membrane 2333 along the width direction thereof.

The active material of cathode plate is lithium iron phosphate, and the active material of anode plate is graphite. The thermal insulation material of the first thermal insulation layer 2334 adopts aluminum oxide, and the first thermal insulation layer 2334 has a thickness of 20 mm.

The battery cell 20 having the above structure was discharged under the condition of -10°C.

### Test results were as follows:

FIG. 15 shows the temperature rise curve at a bottom of the battery cell of Example 5.

It can be seen from FIG. 15 that a maximum temperature rise at the bottom of the battery cell 20 was 21 °C.

In addition, the capacity fading rate (fading) of the battery cell 20 was 20.5%.

Example 6: Both the cathode plate and the anode plate adopt stainless steel substrates, and the first thermal insulation layer 2334 is arranged on the base membrane 2333, which is arranged on the outermost layer of the plurality of electrode plates 232.

The active material of cathode plate is lithium iron phosphate, and the active material of anode plate is graphite. The thermal insulation material of the first thermal insulation layer 2334 adopts aluminum oxide, and the first thermal insulation layer 2334 has a thickness of 20 mm.

The battery cell 20 having the above structure was discharged under the condition of -10°C.

### The test results were as follows:

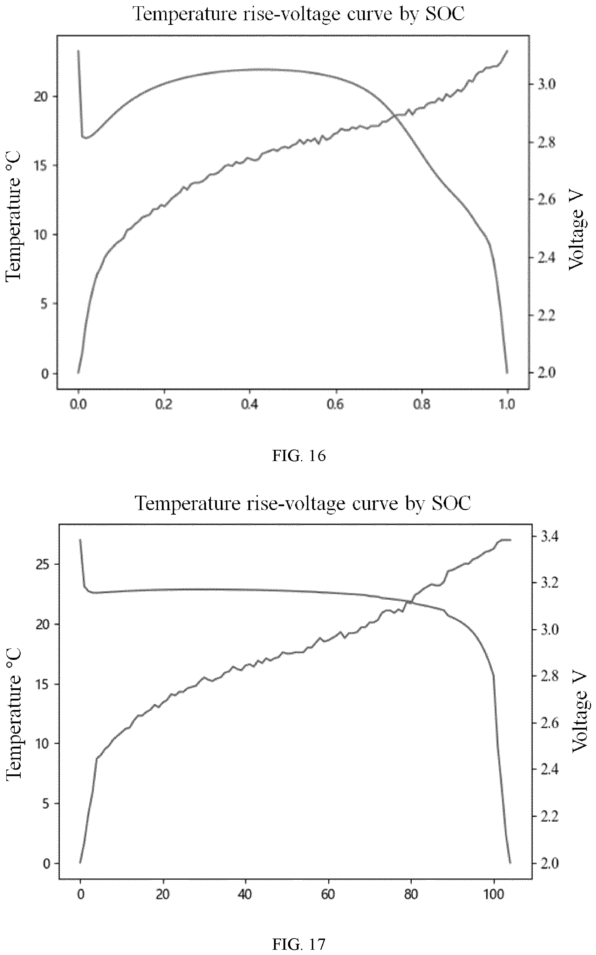

FIG. 16 shows a temperature rise curve at a bottom of the battery cell of Example 6.

It can be seen from FIG. 16 that a maximum temperature rise at the bottom of the battery cell 20 was 23°C.

In addition, the capacity fading rate (fading) of the battery cell 20 was 23.1%.

It can be concluded from Example 3 and Example 5, the use of silicon oxide as the thermal insulation material of the first thermal insulation layer 2334, compared with the use of aluminum oxide as the thermal insulation material of the first thermal insulation layer 2334, make the battery cell 20 have a smaller capacity fading rate in a low temperature environment and a higher temperature rise. This demonstrates that the present application adopting silicon oxide as the thermal insulation material of the first thermal insulation layer 2334 can have better effect in reducing the heat dissipation.

It can be concluded from Example 4 and Example 6, the use of silicon oxide as the thermal insulation material of the first thermal insulation layer 2334, compared with the use of aluminum oxide as the thermal insulation material of the first thermal insulation layer 2334, make the battery cell 20 have a smaller capacity fading rate in a low temperature environment and a higher temperature rise. This demonstrates that the present application adopting silicon oxide as the thermal insulation material of the first thermal insulation layer 2334 can have better effect in reducing the heat dissipation.

In order to further verify the impact of the thickness of the first thermal insulation layer 2334 on heat dissipation, some specific implementation manners are also provided hereinbelow to further describe the present application, but the technical parameters involved in the technical solution cannot be construed as limitations to the present application.

Example 7: Both the cathode plate and the anode plate adopt stainless steel substrates, and the first thermal insulation layer 2334 is arranged on one side edge of the base membrane 2333 along the width direction thereof.

The active material of cathode plate is lithium iron phosphate, and the active material of anode plate is graphite. The thermal insulation material of the first thermal insulation layer 2334 adopts silicon oxide, and the first thermal insulation layer 2334 has a thickness of 50 mm.

The battery cell 20 having the above structure was discharged under the condition of -10°C.

### Test results were as follows:

FIG. 17 shows a temperature rise curve at a bottom of the battery cell of Example 7.

It can be seen from FIG. 17 that a maximum temperature rise at the bottom of the battery cell 20 was 28°C.

In addition, the capacity fading rate (fading) of the battery cell 20 was 18%.

Example 8: Both the cathode plate and the anode plate adopt stainless steel substrates, and the first thermal insulation layer 2334 is arranged on the base membrane 2333, which is arranged on the outermost layer of the plurality of electrode plates 232.

The active material of cathode plate is lithium iron phosphate, and the active material of anode plate is graphite. The thermal insulation material of the first thermal insulation layer 2334 adopts silicon oxide, and the first thermal insulation layer 2334 has a thickness of 50 mm.

The battery cell 20 having the above structure was discharged under the condition of -10°C.

### The test results were as follows:

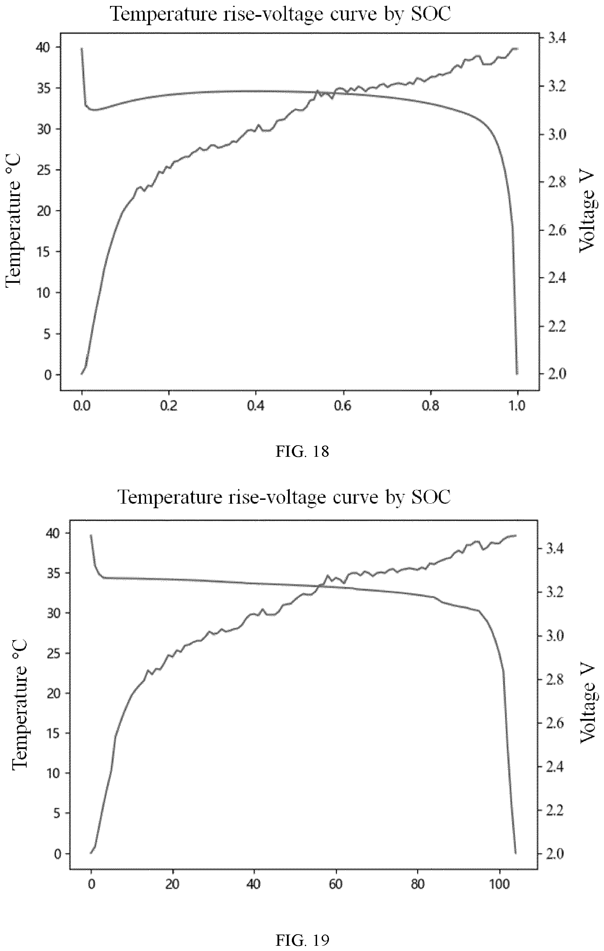

FIG. 18 shows a temperature rise curve at a bottom of the battery cell of Example 8.

It can be seen from FIG. 18 that a maximum temperature rise at the bottom of the battery cell 20 was 39°C.

In addition, the capacity fading rate (fading) of the battery cell 20 was 15.6%.

It can be concluded from Example 3 and Example 7 that under the same conditions of adopting silicon oxide as the thermal insulation material of the first thermal insulation layer 2334, the greater the thickness of the first thermal insulation layer 2334, the higher the temperature rise of the battery cell 20 in a low temperature environment, but the capacity fading rate (fading) of the battery cell 20 does not decrease further. This demonstrates that the increase in the thickness of the first thermal insulation layer 2334 of the present application can improve the temperature rise of the battery cell 20 in a low temperature environment.

Similarly, it can be concluded from Example 3 and Example 7 that under the same conditions of adopting silicon oxide as the thermal insulation material of the first thermal insulation layer 2334, the greater the thickness of the first thermal insulation layer 2334, the higher the temperature rise of the battery cell 20 in a low temperature environment, but the capacity fading rate (fading) of the battery cell 20 does not decrease further. This demonstrates that the increase in the thickness of the first thermal insulation layer 2334 of the present application can improve the temperature rise of the battery cell 20 in a low temperature environment.

Based on above situations, the application also provides a more optimal Example.

Example 9: Both the cathode plate and the anode plate adopt stainless steel substrates, and the first thermal insulation layer 2334 is arranged on one side edge of the base membrane 2333 along the width direction thereof, that is, the thermal insulation region, and the second thermal insulation layer 2336 is arranged on other regions expect the thermal insulation region.

The active material of cathode plate is lithium iron phosphate, and the active material of anode plate is graphite. The thermal insulation material of both the first thermal insulation layer 2334 and the second thermal insulation layer 2336 adopts silicon oxide. The first thermal insulation layer 2334 has a thickness of 50 mm, and the second thermal insulation layer 2336 has a thickness of 20 mm.

The battery cell 20 having the above structure was discharged under the condition of -10°C.

### The test results were as follows:

FIG. 19 shows a temperature rise curve at a bottom of the battery cell of Example 9.

It can be seen from FIG. 19 that a maximum temperature rise at the bottom of the battery cell 20 was 39°C.

In addition, the capacity fading rate (fading) of the battery cell 20 was 12%.

It can be concluded from Example 7 and Example 9 that under the same conditions of adopting silicon oxide as the thermal insulation material of the first thermal insulation layer 2334 and the same thickness of the first thermal insulation layer 2334, the battery cell 20 with arrangement of the second thermal insulation layer 2336 on other regions can have higher temperature rise in a low temperature environment, and the capacity fading rate (fading) of the battery cell 20 is much smaller. This demonstrates that the additional arrangement of the second thermal insulation layer 2336 on other regions can have better effect in reducing the heat dissipation.

According to some embodiments of the present application, referring to FIG. 8 and FIG. 9, the present application provides a battery cell 20, comprising the electrode assembly 23 as described in any of the above embodiments.

On the one hand, by configuring the separator 233 to be thermally insulated on at least one of the first side and the second side of each of the plurality of electrode plates 232, the heat generated by the electrode assembly 23 is not easy to dissipate from the first side or the second side when the battery 100 in normal operation, so that the heat can be retained within the electrode assembly 23, and then the temperature of the battery cell 20 can also be raised even when the battery 100 is in a low temperature environment.

On the other hand, by configuring the separator 233 to be thermally insulated on the outermost layer of the plurality of electrode plates 232, the heat generated by the electrode assembly 23 is not easy to dissipate from the outermost layer of the plurality of electrode plates 232 when the battery 100 in normal operation, so that the heat can be retained within the electrode assembly 23, and then the temperature of the battery cell 20 can also be raised even when the battery 100 is in a low temperature environment.

According to some embodiments of the present application, referring to FIG. 3, the battery cell 20 further comprises a casing 24, and the casing 24 has an accommodating cavity 241, and the electrode assembly 23 is disposed in the accommodating cavity 241. A third thermal insulation layer is arranged on a cavity wall of the accommodation cavity 241.

Specifically, the casing 24 comprises an end cover 21 and a casing body 22, and the end cover 21 covers an opening of the casing body 22 to define and form an accommodating cavity 241.

By arranging the third thermal insulation layer on the cavity wall of the accommodation cavity 241, it is possible to prevent heat from escaping from the casing 24.

Optionally, in the thickness direction of the electrode assembly 23, the third thermal insulation layer is arranged on at least one side wall of the accommodation cavity 241. Specifically, the thickness direction of the electrode assembly 23 is the Y direction shown in FIG. 4 and FIG. 5.

The cavity wall on a side of the accommodation cavity 241 in the thickness direction of the electrode assembly 23 has the largest area, which can improve the thermal insulation effect.

Optionally, the third thermal insulation layer is arranged on a cavity wall of at least one side of the accommodation cavity 241 in directions other than the thickness direction of the electrode assembly 23,.

Optionally, the thermal insulation material in the third thermal insulation layer may be the same as that of the aforementioned first thermal insulation layer 2334, and details will not be repeated here.

Referring to FIG. 3, according to some embodiments of the present application, the battery cell 20 comprises a casing 24 and an insulating layer, the casing 24 has an accommodation cavity 241, the electrode assembly 23 is disposed in the accommodation cavity 241, and the insulating layer is arranged on the electrode assembly 23 and the cavity wall of the accommodating cavity 241. The insulating layer comprises an insulating base layer and a fourth thermal insulation layer, and the fourth thermal insulation layer is arranged on the insulating base layer.

The insulating layer may be called a polyester film (mylar film), which can be insulated and isolated between the electrode assembly 23 and the casing 24, so as to avoid a short circuit between the electrode assembly 23 and the casing 24.

By arranging the fourth thermal insulation layer on the insulating base membrane, another layer of thermal insulation layer can be added outside the electrode assembly 23, which can cooperate with the separator 233 to achieve a double thermal insulation effect.

Optionally, the fourth thermal insulation layer can be covered on a surface of one side of the insulating base layer, or can be covered on surfaces of both sides of the insulating base layer, or can be covered on a part of the surface of one side of the insulating base layer.

Referring to FIG. 2, according to some embodiments of the present application, referring to FIG. 2, the present application provides a battery 100, comprising the battery cell 20 as described in any of the above embodiments.

On the one hand, by configuring the separator 233 to be thermally insulated on at least one of the first side and the second side of each of the plurality of electrode plates 232, the heat generated by the electrode assembly 23 is not easy to dissipate from the first side or the second side when the battery 100 in normal operation, so that the heat can be retained within the electrode assembly 23, and then the temperature of the battery cell 20 can also be raised even when the battery 100 is in a low temperature environment.

On the other hand, by configuring the separator 233 to be thermally insulated on the outermost layer of the plurality of electrode plates 232, the heat generated by the electrode assembly 23 is not easy to dissipate from the outermost layer of the plurality of electrode plates 232 when the battery 100 in normal operation, so that the heat can be retained within the electrode assembly 23, and then the temperature of the battery cell 20 can also be raised even when the battery 100 is in a low temperature environment.

According to some embodiments of the present application, the present application provides an electrical device, comprising the battery 100 as described in any of the above embodiments.

On the one hand, by configuring the separator 233 to be thermally insulated on a side of each of the plurality of electrode plates 232 in the width direction, the heat generated by the electrode assembly 23 is not easy to dissipate from the side of each of the plurality of electrode plates 232 in the width direction in normal operation, so that the heat can be retained within the electrode assembly 23, and then the temperature of the battery cell 20 can also be raised even when the battery 100 is in a low temperature environment.

On the other hand, by configuring the separator 233 to be thermally insulated on the outermost layer of the plurality of electrode plates 232, the heat generated by the electrode assembly 23 is not easy to dissipate from the outermost layer of the plurality of electrode plates 232 when the battery 100 in normal operation, so that the heat can be retained within the electrode assembly 23, and then the temperature of the battery cell 20 can also be raised even when the battery 100 is in a low temperature environment.

According to some embodiments of the present application, referring to FIG. 7 to FIG. 9, the present application provides an electrode assembly 23, which comprises a plurality of electrode plates 232 and a separator 233. The separator 233 comprises a plurality of separator segments 2335, and the plurality of separator segments 2335 and the plurality of electrode plates are arranged alternately. The separator 233 comprises a base membrane 2333 and a first thermal insulation layer 2334. The first thermal insulation layer 2334 comprises a plurality of thermal insulating segments 2334a, and each of the plurality of thermal insulating segment 2334a is arranged on each side edge of a corresponding one of the plurality of separator segments 2335 along the width direction. An orthographic projection of the first thermal insulation layer 2334 onto the base membrane 2333 has no overlapping area with an orthographic projection of the electrode plate 232 on the base membrane 2333. The orthographic projection of the first thermal insulation layer 2334 onto the base membrane 2333 forms a thermal insulation region, and a thickness of the separator 233 in the thermal insulation region is greater than a thickness of the separator 233 in other regions except the thermal insulation region. The separator 233 further comprises a second thermal insulation layer 2336, the second thermal insulation layer 2336 is arranged on other regions except the thermal insulation region, and the thickness of the second thermal insulation layer 2336 is smaller than a thickness of the first thermal insulation layer 2334. All thermal insulating segments 2334a located on the same side along the first direction are connected to each other by thermocompression. The separator 233 has a thermal insulation material for thermal insulation and a binder. The insulating material is silicon oxide. The binder comprises a polyvinyl fluoride, a polyacrylate, a sodium alginate, or combinations thereof. A content of the binder accounts for ≤ 50% by weight of the first thermal insulation layer 2334. The thickness of the first thermal insulation layer 2334 is about 5 mm to about 100 mm.

According to some embodiments of the present application, referring to FIG. 7 to FIG. 9, the present application provides an electrode assembly 23, which comprises a plurality of electrode plates 232 and a separator 233. The separator 233 comprises a base membrane 2333 and a first thermal insulation layer 2334, the separator 233 comprises a first separator 2331 and a second separator 2332, the base membrane 2333 comprises a first base membrane and a second base membrane, the first separator 2331 has a first base membrane, the second separator 2332 has a second base membrane, and the first separator 2331 and the plurality of electrode plates 232 are arranged alternately to form an electrode unit 233, and the second separator 2332 is wound at an outer side of the electrode unit 233. The first thermal insulation layer 2334 is arranged on the second base membrane. The first base membrane and the second base membrane are formed integrally. The orthographic projection of the first thermal insulation layer 2334 onto the base membrane 2333 forms a thermal insulation region. The separator 233 further comprises a second thermal insulation layer 2336, the second thermal insulation layer 2336 is arranged on other regions except the thermal insulation region, and the thickness of the second thermal insulation layer 2336 is smaller than a thickness of the first thermal insulation layer 2334. The separator 233 has a thermal insulation material for thermal insulation and a binder. The insulating material is silicon oxide. The binder comprises a polyvinyl fluoride, a polyacrylate, a sodium alginate, or combinations thereof. A content of the binder accounts for ≤50% by weight of the first thermal insulation layer 2334. The thickness of the first thermal insulation layer 2334 is about 5 mm to about 100 mm.

Finally, it should be noted that the above-mentioned embodiments are provided merely for describing the technical solutions of the present application, but not for limiting the present application. Although the present application is described in detail with reference to the above-mentioned embodiments, those of ordinary skill in the art should understand that they may still make modifications to the technical solutions described in the above-mentioned embodiments or make equivalent replacements to some or all technical features thereof; and these modifications or replacements do not make the essence of the corresponding technical solution depart from the scope of the technical solutions of the embodiments of the present application, and shall fall within the scope of claims and specification of the present application. In particular, provided that there is no structural conflict, the technical features in the embodiments may be combined in any way. The present application is not limited to the specific embodiments disclosed herein, but should include all technical solutions falling within the scope of the claims.

## Claims

1. An electrode assembly, comprising:
a plurality of electrode plates, each of the plurality of electrode plates having a first side and a second side which are oppositely arranged along a first direction, and at least one of the first side and the second side being provided with a tab; and
a separator, arranged alternately with the plurality of electrode plates;
wherein
the separator is configured to be thermally insulated on at least one of the first side and the second side; and/or
the separator is configured to be thermally insulated on an outermost layer of the plurality of electrode plates.

2. The electrode assembly according to claim 1, wherein at least one of the plurality of electrode plates comprises at least one of a high thermal resistance alloy substrate, and the high thermal resistance alloy substrate comprises at least one of a stainless steel, an iron-nickel alloy, an iron-aluminum alloy, an iron-nickel-manganese alloy, a nickel-manganese alloy, a nickel-manganese-aluminum alloy.

3. The electrode assembly according to claim 1 or 2, wherein the separator comprises a base membrane and a first thermal insulation layer, and the first thermal insulation layer is arranged on at least one side edge along the first direction; and /or
the first thermal insulation layer is arranged on the base membrane which is arranged on the outermost layer of the plurality of electrode plates.

4. The electrode assembly according to claim 3, wherein in case that the first thermal insulation layer is arranged on at least one side edge of the base membrane along the first direction, an orthographic projection of the first thermal insulation layer along a second direction onto the base membrane has no overlapping area with an orthographic projection of the electrode plate onto the base membrane;
wherein, the first direction is perpendicular to the second direction.

5. The electrode assembly according to claim 3 or 4, wherein in case that the first thermal insulation layer is arranged on at least one side edge of the base membrane along the first direction, an orthographic projection of the first thermal insulation layer along the second direction onto the base membrane forms a thermal insulation region, and a thickness of the separator in the thermal insulation region is greater than a thickness of the separator in other regions except the thermal insulation region.

6. The electrode assembly according to any one of claims 3-5, wherein
in case that the first thermal insulation layer is arranged on at least one side edge of the base membrane along the first direction,
the separator comprises a plurality of separator segments,
the plurality of separator segments and the plurality of electrode plates are arranged alternately,
the first thermal insulation layer comprises a plurality of thermal insulating segments, and
each of the plurality of thermal insulating segments is arranged on a side edge of a corresponding one of the plurality of separator segments along the first direction.

7. The electrode assembly according to claim 6, wherein at least two adjacent thermal insulating segments located on a same side along the first direction are connected to each other.

8. The electrode assembly according to claim 7, wherein at least two adjacent thermal insulating segments located on the same side along the first direction are connected to each other by thermocompression.

9. The electrode assembly according to any one of claims 3 to 8, wherein
in case that the first thermal insulation layer is arranged on the base membrane which is arranged on the outermost layer of the plurality of electrode plates, the separator comprises a first separator and a second separator, the base membrane comprises a first base membrane and a second base membrane, the first separator has a first base membrane, and the second separator has the second base membrane;
the first separator and the plurality of electrode plates are arranged alternately to form an electrode unit, and the second separator is wound at an outer side of the electrode unit; and
the first thermal insulation layer is arranged on the second base membrane.

10. The electrode assembly according to any one of claims 3-9, wherein an orthographic projection of the first thermal insulation layer along the second direction onto the base membrane forms a thermal insulation region, the separator further comprises a second thermal insulation layer, and the second thermal insulation layer is arranged on other regions of the base membrane except the thermal insulation region;
wherein a thickness of the second thermal insulation layer is smaller than a thickness of the first thermal insulation layer, and the first direction is perpendicular to the second direction.

11. The electrode assembly according to any one of claims 3 to 10, wherein the thickness of the first thermal insulation layer is between 5 mm and 100 mm.

12. The electrode assembly according to any one of claims 3 to 11, wherein in case that the first thermal insulation layer is arranged on the base membrane which is arranged on the outermost layer of the plurality of electrode plates, the first thermal insulating layer has a thermal insulation material configured for thermal insulation and a binder; and
a content of the binder accounts for ≤ 20% by weight of the first thermal insulation layer.

13. The electrode assembly according to any one of claims 3-12, wherein
in case that the first thermal insulation layer is arranged on at least one side edge of the base membrane along the first direction, the first thermal insulating layer has a thermal insulation material for thermal insulation and a binder; and
a content of the binder accounts for ≤ 50% by weight of the first thermal insulation layer.

14. The electrode assembly according to any one of claims 1 to 13, wherein the separator has a thermal insulation material for thermal insulation, and the thermal insulation material comprises a oxide, a nitride, or a combination thereof,
optionally, the oxide comprises silicon oxide, niobium oxide, titanium oxide, aluminum oxide, or a combination thereof; and
optionally, the nitride comprises silicon nitride, niobium nitride, titanium nitride, aluminum nitride, or a combination thereof.

15. A battery cell, comprising the electrode assembly according to any one of claims 1-14.

16. The battery cell according to claim 15, wherein the battery cell further comprises a casing, the casing has an accommodation cavity, and the electrode assembly is disposed in the accommodation cavity;
a third thermal insulation layer is arranged on a cavity wall of the accommodating cavity.

17. The battery cell according to claim 15 or 16, wherein the battery cell further comprises a casing and an insulating layer, the casing has an accommodation cavity, the electrode assembly is disposed in the accommodation cavity, the insulating layer disposed between the electrode assembly and a cavity wall of the accommodation cavity; and
the insulating layer comprises an insulating base layer and a fourth thermal insulation layer, and the fourth thermal insulation layer is arranged on the insulating base layer.

18. A battery, comprising the battery cell according to any one of claims 15-17.

19. An electrical device comprising the battery of claim 18.
